# EUROPEAN PATENT APPLICATION

(11) **EP 4 447 430 A1**
(43) Date of publication of application: **16.10.2024**
(21) Application number: 22906558.6
(22) Date of filing: 13.12.2022
(51) Int. Cl.: H04N 5/262

(54) **VIDEO GENERATION METHOD AND APPARATUS, AND ELECTRONIC DEVICE AND MEDIUM**

(30) Priority: 14.12.2021 CN 202111532213
(71) Applicant: Beijing Zitiao Network Technology Co., Ltd., Beijing 100190 (CN)
(72) Inventor: HAN, Xuyue, Beijing 100086 (CN)
(74) Representative: Dentons UK and Middle East LLP
(86) International application number: PCT/CN2022/138677
(87) International publication number: WO 2023/109813

(57) **Abstract**

Disclosed in the embodiments of the present disclosure are a video generation method and apparatus, and an electronic device and a storage medium. The method comprises: acquiring a first picture material, and determining a first image editing template that is used for the first picture material, wherein the first image editing template is used for configuring an image editing operation that is executed for a second picture material, such that the second picture material is edited according to the image editing operation, so as to generate the first picture material, and the first picture material presents an image editing effect corresponding to the first image editing template; according to the first image editing template, matching a first video editing template for the first picture material; and according to a video editing operation that is configured for the first video editing template, editing the first picture material, so as to generate a target video.

## Description

### CROSS-REFERENCE TO RELATED APPLICATIONS

This application claims priority to and is based on a Chinese application with an application number 202111532213.5 and a filing date of December 14, 2021, the aforementioned application is hereby incorporated by reference in its entirety.

### FIELD OF THE INVENTION

The present disclosure relates to the field of information technology, and in particular, to a video generation method, apparatus, electronic device, and storage medium.

### BACKGROUND

With the continuous development of terminal technology and network technology, there are more and more applications adapted to the terminal, for example, a Selfie application, through which the user can realize self-shooting and obtain more beautiful pictures.

However, the current Selfie application cannot automatically generate a video based on the user's self-portraits, resulting in that the pictures taken by the user cannot be presented in the form of a video, and there is a problem of poor user experience.

### DISCLOSURE OF THE INVENTION

In order to solve or at least partially solve the above technical problems, embodiments of the present disclosure provide a video generation method, apparatus, electronic device, and storage medium, which realize the purpose of automatically generating a video based on an image editing template used for image materials.

In a first aspect, an embodiment of the present disclosure provides a video generation method, including:
acquiring a first image material and determining a first image editing template used for the first image material; wherein, the first image editing template is used for configuring an image editing operation to be performed on a second image material so that the first image material is generated from the second image material after the second image material has been edited according to the image editing operation; wherein the first image material presents an image editing effect corresponding to the first image editing template;
matching a first video clipping template for the first image material according to the first image editing template;
editing the first image material according to a video editing operation configured by the first video clipping template, to generate a target video.

In a second aspect, an embodiment of the present disclosure further provides a video generation apparatus, including:
an acquisition module, configured to acquire a first image material and determining a first image editing template used for the first image material; wherein, the first image editing template is used for configuring an image editing operation to be performed on a second image material so that the first image material is generated from the second image material after the second image material has been edited according to the image editing operation; wherein the first image material presents an image editing effect corresponding to the first image editing template;
a matching module, configured to match a first video clipping template for the first image material according to the first image editing template;
a first generation module, configured to edit the first image material according to a video editing operation configured by the first video clipping template, to generate a target video.

In a third aspect, an embodiment of the present disclosure also provides an electronic device, including one or more processors and a memory for storing one or more programs, which, when executed by the one or more processors, cause the one or more processors to implement the video generation method as described above.

In a fourth aspect, an embodiment of the present disclosure also provides a computer-readable storage medium storing a computer program which, when executed by a processor, causes implementation of the video generation method as described above.

In a fifth aspect, an embodiment of the present disclosure also provides a computer program product including a computer program or instructions, which, when running on a computer, cause the computer to implement the video generation method as described above.

In a sixth aspect, an embodiment of the present disclosure also provides a computer program, which includes program codes that, when executed by a computer, cause the computer to implement the video generation method as described above.

### DESCRIPTION OF THE DRAWINGS

The above and other features, advantages and aspects of various embodiments of the present disclosure will become more apparent when taken in conjunction with the accompanying drawings and with reference to the following detailed description. Throughout the drawings, the same or similar reference numerals refer to the same or similar elements. It should be understood that the drawings are schematic, and the components and elements are not necessarily drawn to scale. In the attached drawings:
Fig. 1 is a flow chart of a video generation method in an embodiment of the present disclosure;
FIG. 2 is a flow chart of a video generation method in an embodiment of the present disclosure;
FIG. 3 is a schematic diagram of a target page in an embodiment of the present disclosure;
FIG. 4 is a schematic diagram of another target page in an embodiment of the present disclosure;
FIG. 5 is a schematic diagram of a video details page in an embodiment of the present disclosure;
FIG. 6 is a schematic diagram of a page illustrating historical image materials in an embodiment of the present disclosure;
FIG. 7 is a schematic structural diagram of a video generation apparatus in an embodiment of the present disclosure;
FIG. 8 is a schematic structural diagram of an electronic device in an embodiment of the present disclosure.

### DETAILED DESCRIPTION OF PREFERRED EMBODIMENTS

Embodiments of the present disclosure will be described in more detail below with reference to the accompanying drawings. Although some embodiments of the present disclosure are shown in the drawings, it should be understood that the present disclosure can be implemented in various forms and should not be construed as limited to the embodiments set forth here. On the contrary, these embodiments are provided for a more thorough and complete understanding of the present disclosure. It should be understood that the drawings and embodiments of this disclosure are only for illustrative purposes, and are not intended to limit the scope of protection of this disclosure.

It should be understood that the steps described in the method embodiments of the present disclosure can be performed in different order and/or in parallel. In addition, the method embodiments may include additional steps and/or omit the steps shown. The scope of the present disclosure is not so limited in this respect.

As used herein, the term "including" and its variations are open including, that is, "including but not limited to". The term "based on" means "based at least in part". The term "one embodiment" means "at least one embodiment"; The term "another embodiment" means "at least one other embodiment"; The term "some embodiments" means "at least some embodiments". Relevant definitions of other terms will be given in the following description.

It should be noted that the concepts of "first" and "second" mentioned in this disclosure are only used to distinguish different devices, modules or units, and are not used to limit the order or interdependence of the functions performed by these devices, modules or units.

It should be noted that the modifications of "one" and "multiple" mentioned in this disclosure are illustrative rather than restrictive, and those skilled in the art should understand that unless the context clearly indicates otherwise, they should be interpreted as "one or more".

The names of messages or information exchanged between multiple devices in this embodiment are only for illustrative purposes, and are not intended to limit the scope of these messages or information.

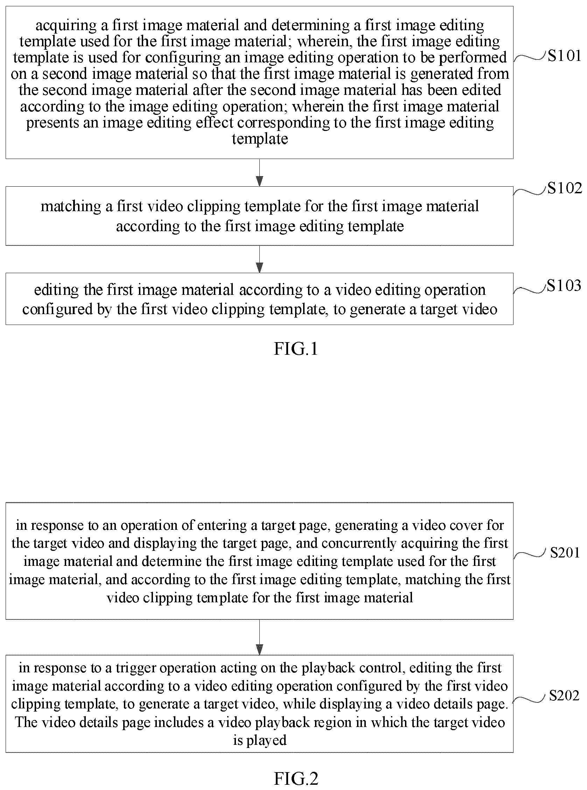

FIG. 1 is a flowchart of a video generation method in an embodiment of the present disclosure, this embodiment is applicable to a case where a target video is generated based on a first image material in a client. The method may be executed by a video generating apparatus, which may be implemented in the form of software and/or hardware, and which may be configured in an electronic device, such as a terminal, specifically including but not limited to smartphone, palmtop computer, tablet computer, wearable device with screen, desktop computer, laptop computer, all-in-one machine, smart home equipment, etc.

As shown in FIG. 1, the method specifically may include the following steps:
S 101. acquiring a first image material and determining a first image editing template used for the first image material; wherein, the first image editing template is used for configuring an image editing operation to be performed on a second image material so that the first image material is generated from the second image material after the second image material has been edited according to the image editing operation; wherein the first image material presents an image editing effect corresponding to the first image editing template.

Wherein, the second image material may specifically refer to a picture which may be shot by a user through a client (such as some applications for beautifying pictures), stored in the user's album, or downloaded by the user from the network.

Further, the first image material may present an image editing effect corresponding to the first image editing template (the image editing effect may be, for example, an effect of whitening the skin, an effect of enlarging eyes or modifying the shape of the face, or an effect of adding background stickers, etc.). In other words, the first image material uses the first image editing template for the purpose of making the first image material to present the image editing effect corresponding to the first image editing template, so that users can more conveniently obtain the first image material with some image beautification effects, and the object of improving user experience can be reached.

The first image editing template can be understood as a configuration file in which image editing operations corresponding to some image editing effects are configured. When the user uses the first image editing template to take pictures, the first image editing template will be used for the captured original picture to obtain a final picture with image editing effects. Its essence is to perform image editing operations on the original image based on the configuration file to generate a final image with the same image editing effect as that of the first image editing template. For example, the first image editing template indicates to add a specified filter to the original picture and to add a specified beauty effect on the recognized face, and the addition of the specified filter and the addition of the specified beauty effect can be understood as image editing operations indicated by the first image editing template.

It can be understood that the original picture is not limited to a picture obtained by instant shooting, or a picture selected from a local photo album, or downloaded from the network.

In general, the first image editing template is used for configuring an image editing operation to be performed on a second image material so that the first image material is generated from the second image material after the second image material has been edited according to the image editing operation. Wherein, the second image material can be understood as an original image material to which the first image editing template is not applied, and the first image material is generated from the original image material after the original image material has been edited according to the image editing operation configured by the first image editing template.

S102. matching a first video clipping template for the first image material according to the first image editing template.

Wherein, the first video clipping template can also be understood as a configuration file, and the configuration file is configured with some corresponding video editing operations for realizing video clipping effects. The processing the first image material by using the first video clipping template may be equivalent to editing the first image material according to the video editing operation configured by the first video clipping template to obtain a target video having the same video editing effect as that of the first video clipping template. In other words, the first image material is processed into the target video, and the target video presents a video clip effect corresponding to the first video clipping template. For example, the first video clipping template can indicate to form front and back two video clips of freeze pictures of a specified length from the first image material, incorporate a specified transition effect and a specified music between the two video clips, furthermore, the first image material may specifically include two pictures, and each of front and back two video clips of freeze pictures of a specified length can be respectively generated based on the two pictures. Wherein, forming front and back two video clips of freeze pictures of a specified length, incorporating a specified transition effect and a specified music, can be understood as the video editing operations specified by the first video clipping template.

In some implementations, a binding relationship between the first image editing template and the video clipping template may be established in advance, and the first video clipping template is matched to the first image material based on the binding relationship. More directly, the video clipping template bound to the first image editing template can be determined as the first video clipping template.

Alternatively, the number of video clipping templates bound to the first image editing template is one or more. If there are a plurality of video clipping templates bound to the first image editing template, the first video clipping template can be any one of the plurality.

In general, a preset video clipping template bound to the first image editing template can be determined as the first video clipping template; wherein, if there are a plurality of preset video clipping templates, the second video clipping template can be any one of the plurality of preset video clipping templates.

In some other implementation manners, it is also possible to dynamically match a first video clipping template for the first image material based on the style characteristics of the first image editing template. For example, a video clipping template whose video clipping effect conforms to the style characteristic of the first image editing template can be determined as the first video clipping template. In general, the matching the first video clipping template for the first image material according to the first image editing template includes: determining style characteristic of the first image material according to the first image editing template; based on the style characteristic and style characteristics of candidate video clipping templates, matching the first video clipping template for the first image material.

S 103. editing the first image material according to a video editing operation configured by the first video clipping template, to generate a target video.

Alternatively, the first image material may include one or multiple pictures. Image editing templates respectively used for multiple pictures may be the same or different.

Exemplarily, the first image material may include a plurality of pictures, and the editing the first image material according to a video editing operation configured by the first video clipping template, to generate a target video, includes: filling the plurality of pictures into different positions of the first video clipping template; wherein, the image editing templates respectively used for the plurality of pictures are the same, that is, the image editing templates respectively used for the plurality of pictures each is the first image editing template. For example, the first image material includes two pictures, namely the first picture **a** and the second picture **b,** wherein the image editing template used for the first picture **a** is the first image editing template, and the image editing template used for the second picture **b** is also the first image editing template. Alternatively, the image editing templates respectively used for the plurality of pictures are different, but the image editing templates respectively used for the plurality of pictures may include the first image editing template. For example, the first image material may include two pictures, namely the first picture **a** and the second picture **b,** wherein the image editing template used for the first picture **a** is a second image editing template, and the image editing template used for the second picture **b** is the first image editing template.

The video generation method provided in this embodiment, upon acquiring the first image material, determines the first image editing template and then matches the first video clipping template for the first image material according to the first image editing template, and finally edits the first image material according to the video editing operation configured by the first video clipping template to generate a target video, which realize the purpose of automatically generating a target video for the first image material according to the first image editing template used for the first image material. It should be noted that the first image editing template is used for configuring an image editing operation to be performed on a second image material so that the first image material is generated from the second image material after the second image material has been edited according to the image editing operation; wherein the first image material presents an image editing effect corresponding to the first image editing template.

On the basis of the above embodiments, referring to the schematic flowchart of a video generation method as shown in FIG. 2. This embodiment further describes the video generation method from the perspective of interaction in conjunction with a specific client.

As shown in FIG. 2, the video generation method includes the following steps:
Step S201, in response to an operation of entering a target page, generating a video cover for the target video and displaying the target page, and concurrently acquiring the first image material and determine the first image editing template used for the first image material, and according to the first image editing template, matching the first video clipping template for the first image material.

Wherein, the target page may specifically be a draft box page of a photography application. A guide logo is displayed at an entry control for entering the draft box, so as to guide a user to enter the draft box page and then consume the above-mentioned target video.

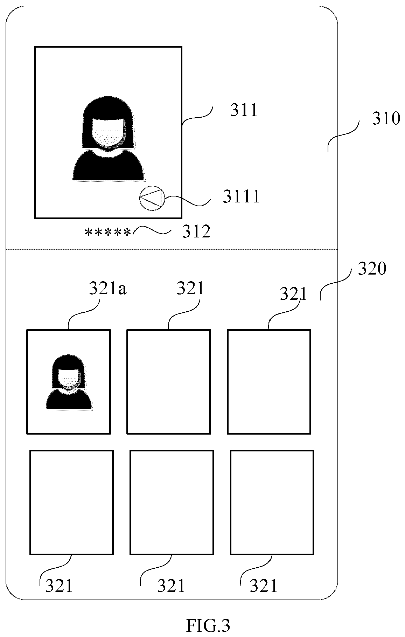

Exemplarily, referring to a schematic diagram of a target page as shown in FIG. 3, a video cover 311 and a playback control 3111 associated with the video cover 311 are displayed in a first region 310 in the target page, and historical image materials 321 are displayed in a second region in the target page, the historical image materials may include the first image material 321a, and the video cover 311 may include the first image material 321a.

By automatically generating the video cover according to historical image materials stored in the target page, and displaying the video cover in the first region in the target page, a purpose of guiding the user to trigger the video cover and then view the target video can be achieved, and the user experience can be improved.

Further, theme information 312 of the first video clipping template can also be displayed at an associated position of the video cover 311. By displaying the theme information of the first video clipping template at the associated position of the video cover, the user can quickly understand the editing effect of the target video corresponding to the video cover, reduce the difficulty of usage, and help improving the user experience.

It should be noted that when the target page is displayed, only the video cover including the first image material is generated, while the target video including the first image material has not been generated yet. The purpose of this configuration is to take into account the subjective behavior of the user, when the user views the target page, the user may or may not view the target video. If the user does not view the target video, there is no need to consume system resources to generate the target video. Therefore, when an interactive behavior of the user viewing the target video is detected, the generation operation of the target video is executed, so that the purpose of reducing the consumption of system resources can be achieved.

It can be understood that generating the video cover for the target video also takes a certain amount of time, and the speed of generation is related to the network status at the client, therefore, when the target page is displayed, if the video cover is not completely generated, a loading screen or a default screen can be displayed to ensure the basic user experience, while prompting the user that content is loading.

In some alternative embodiments, there are multiple target videos, and each target video corresponds to a video cover, and the video covers of respective target videos can be arranged in the first region sequentially in the order of their respective generation times from later to earlier, and the last generated video cover is arranged on the far left of the first region.

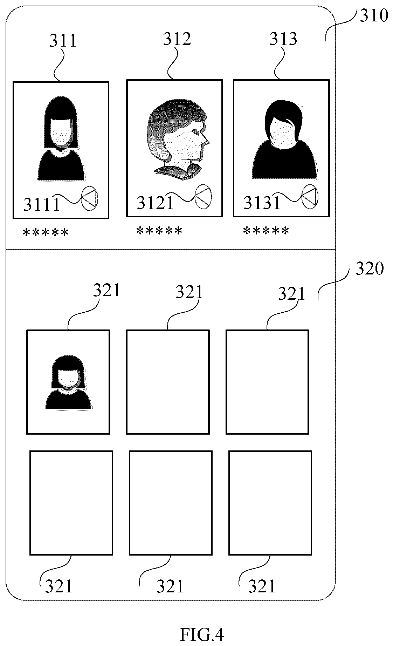

Exemplarily, referring to another schematic diagram of a target page as shown in FIG. 4. There are three video covers, first video cover 311, second video cover 312 and third video cover 313 respectively, displayed in the first region 310 in the target page. Wherein, the first video cover 311 is associated with a first playback control 3111, the second video cover 312 is associated with a second playback control 3121, and the third video cover 313 is associated with a third playback control 3131. Among them, the first video cover 311 is the last generated video cover, and the third video cover 313 is the earliest generated video cover. Alternatively, the image material included in the first video cover 311 can be shot at a time later than the image material included in the second video cover 312, and the image material included in the second video cover 312 can be shot at a time later than the image material included in the third video cover 313 Included footage was shot at a later date. Historical image materials 321 are displayed in the second region 320 in the target page.

By generating and displaying a plurality of video covers, more choices can be provided for the user, so that the user can select a more satisfactory one therefrom for viewing, and the user experience can be improved. Whenever the client is started or the target page is entered, the plurality of video covers can be refreshed once, specifically, according to the shooting times of the historical image materials, and the video cover for the image material whose shooting time is the last is preferentially generated.

Step S202: in response to a trigger operation acting on the playback control, editing the first image material according to a video editing operation configured by the first video clipping template, to generate a target video, while displaying a video details page. The video details page includes a video playback region in which the target video is played.

That is, the generation operation of the target video is executed only when the user triggers a playback control, so as to avoid a problem that the system resources may be wasted due to a user executing generation operation of the target video without viewing the target video.

Specifically, if the user triggers the first playback control 3111 in FIG. 4, then a target video corresponding to the first video cover 311 is played in the video playback region; if the user triggers the second playback control 3112 in FIG. 4, then a target video corresponding to the second video cover 312 is played in the video playback region, and so on.

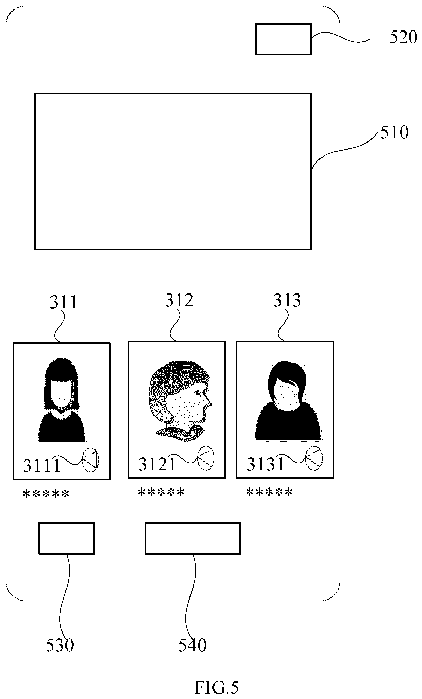

Exemplarily, referring to a schematic diagram of a video details page as shown in FIG.5, which includes a video playback region 510, video covers for respective target videos (first video cover 311, second video cover 312, and third video cover 313), and the first playback control 3111 associated with the first video cover 311, the second playback control 3121 associated with the second video cover 312, and the third playback control 3131 associated with the third video cover 313.

The method further includes: switching the target video played in the video playback region to the target video corresponding to another video cover, in response to a first trigger operation acting on a playing screen of the target video played in the video playback region. For example, the target video currently played in the video playback region 510 is the target video corresponding to the second video cover 312. when the user slides left on the video screen of the target video, the target video played in the video playback region 510 can be switched to the target video corresponding to the first video cover 311. For example, the target video currently played in the video playback region 510 is the target video corresponding to the second video cover 312, when the user slides right on the video screen of the target video, the target video played in the video playback region 510 can be switched to the target video corresponding to the third video cover 313.

Alternatively, in response to a second trigger operation acting on a target playback control in the video details page, switching the target video played in the video playback region to a target video corresponding to the video cover associated with the target playback control; wherein, the second trigger operation serves to select the target playback control from the playback controls respectively associated with respective video covers displayed in the video details page. For example, the target video currently played in the video playback region 510 is the target video corresponding to the second video cover 312, if the user triggers the playback control 3111 associated with the first video cover 311, the target video played in the video playback region 510 can be switched to the target video corresponding to the first video cover 311.

In order to enable the user to quickly switch the target video played in the video playback region 510, after the video details page is displayed, the method further includes: based on the generation times of the video covers of respective target videos, generating target videos respectively corresponding to the remaining video covers sequentially in the order from later to earlier. For example, when the user triggers the first video cover 311 in FIG. 4, the target video corresponding to the first video cover 311 is generated, and the video details page as shown in FIG. 5 is entered, where the target video corresponding to the first video cover 311 is displayed in the video playback region 510, after the target video corresponding to the first video cover 311 is generated, the target video corresponding to the second video cover 312 is generated. After the target video corresponding to the second video cover 312 is generated, the target video corresponding to the third video cover 313 is then generated.

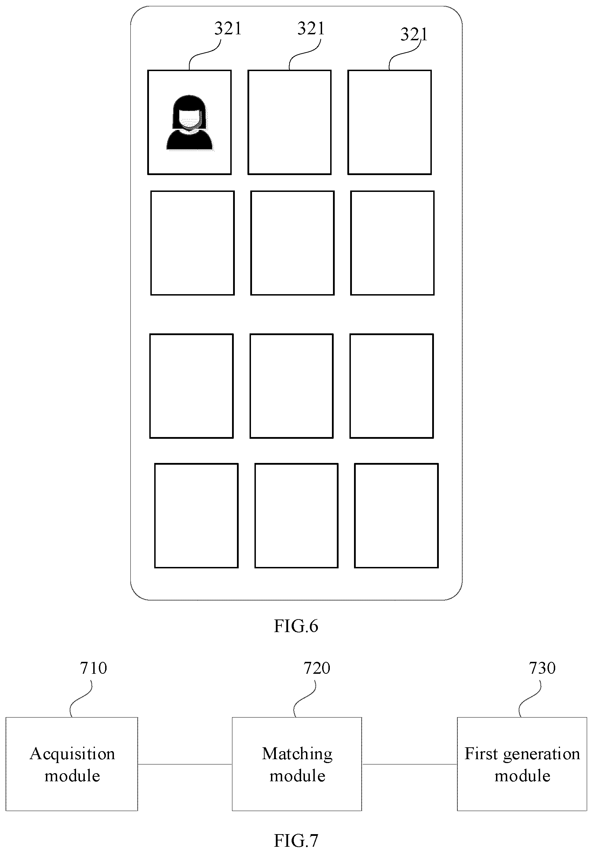

Further, as shown in FIG. 5, a material replacement control 520 is displayed in the video details page. The method further includes: in response to a trigger operation acting on the material replacement control 520, displaying the historical image material, wherein the historical image material may refer to an image material in the form of a picture, excluding any image material in the form of video. Exemplarily, refer to a schematic diagram of a page displaying historical image materials as shown in FIG. 6, wherein the historical image material may specifically be an image material saved in the target page, respective image materials can be arranged sequentially in the order of their respective shooting times from later to earlier, and the last shot image material is arranged and display on the very front, while the earliest shot image material is arranged and display on the very back.

In response to a third trigger operation acting on a third image material, determine a second image editing template used for the third image material; and match a second video clipping template for the third image material according to the second image editing template; according to the video editing operation configured by the second video clipping template, edit the third image material to generate a new target video; switch to the video details page, and play the new target video in the video playback region; wherein, the third trigger operation is used to select the third image material from the displayed historical image materials. That is, the user can customize selection of image materials, and then generate a target video for the image material selected by the user. By supporting user-customized selection of image materials, a target video for the image materials selected by the user can be generated, and thus the purpose of improving user interaction experience can be achieved.

Further, as shown in FIG. 5, a saving control 530 and a sharing control 540 are displayed in the video details page. The method further includes: saving the target video to the target page in response to a trigger operation acting on the saving control; in response to a trigger operation acting on the sharing control, saving the target video in a local photo album, and concurrently sending the target video to a first server, so that the first server can stream the target video to a preset client for playback. Among them, during the process of saving the target video, a loading screen is displayed to enhance the interactive experience, and a prompt message "saved to the draft box" can be displayed after the saving is completed.

By setting the sharing control 540, it is convenient for the user to share the target video from one client to another client, which can improve the user's experience. For example, one client is a shooting client, and the other client is a video creation client, then the user can generate a target video from a picture taken by the one client, and share the target video to the video creation client.

In some embodiments, the acquiring the first image material includes:
determining image editing templates used for respective historical image materials; determining the historical image materials using the target image editing template as candidate image materials, wherein the target image editing template is an image editing template bound to a video clipping template; determining the first image material from the candidate image materials. That is, the first image material is preferentially acquired from the image materials using the image editing template bound to the preset video clipping template.

The determining the first image material from the candidate image materials includes:
if the candidate image materials exist under a collection label, determining a candidate image material under the collection label whose shooting time is the last as the first image material; if there is no candidate image material existing under the collection label, determining a candidate image material under a default label whose shooting time is the last as the first image material. By preferentially acquiring the first image material from the collection label, the purpose of generating a target video for the image material that the user is more concerned about can be achieved, the possibility of the user sharing the target video can be improved, and the user's experience can be improved.

In some embodiments, for example, the first image editing template A is bound to the first video clipping template U; the second image editing template B is not bound to any video clipping template; the third image editing template C is bound to the second video clipping template V, the third video clipping template W, the fourth video clipping template X, the fifth video clipping template Y and the sixth video clipping template Z; the fourth image editing template D is bound to the second video clipping template V, the third video clipping template W , the fourth video clipping template X, the fifth video clipping template Y and the sixth video clipping template Z; the fifth image editing template E is bound to the second video clipping template V, the third video clipping template W, the fourth video clipping template X, the fifth video clipping template Y and the sixth video clipping template Z. The user uses the first image editing template A to successively take three photos A1\A2\A3, and then generates a target video for the photo A3 based on the first video clipping template U, which is denoted as U-A3. Then the user uses the second image editing template B to take two photos B1\B2 successively, since the second image editing template B is not bound to any video clipping template, no target video is generated for the photo B1\B2, and there is still only the target video U-A3 at this time. Then the user uses the third image editing template C to take a photo C1, then randomly determines to use the fifth video clipping template Y for generating the target video for the photo C1, which is denoted as Y-C1, and the target video Y-C1 generated later is arranged on the left side of the target video U-A3 generated earlier, at this time, the target videos include Y-C1, U-A3. Then the user uses the fourth image editing template D to take the photo D1, and randomly determine to use the fourth video clipping template Y for generating the target video for the photo D1, at this time, the target videos include X-D1, Y-C1, and U-A3. Then the user uses the first image editing template A to take photo A4, then uses the first video clipping template U to bind and generate the target video for photo A4, if the total number of target videos is limited to 3, then the target video at this time includes U-A4, X-D1, Y-C1.

It should be noted that, usually when the user enters the target page, the video cover for respective target videos can be generated, and the video clipping templates for respective target videos can be determined, and when the user triggers a playback control, a corresponding target video can be generated to realize the reasonable utilization of the system sources. Wherein, no matter which node fails to operate, the user will be displayed with a prompt message.

For some complex video clipping templates, it may be necessary to upload the image material to the server, and the server will implement the editing of the image material according to the editing operation of the video clipping template, at this time, the user will be prompted, and the image material will be uploaded to the server upon authorization from the user. In general, the editing the first image material according to a video editing operation configured by the first video clipping template, to generate a target video, includes: if the first video clipping template is a preset video clipping template, displaying prompt information; in response to confirmation operation triggered for the prompt information, uploading the first image material to the second server, so as to edit, by the second server, the first image material according to a video editing operation configured by the first video clipping template, to generate a target video; and receiving the target video from the second server.

Fig. 7 is a schematic structural diagram of a video generation apparatus in an embodiment of the present disclosure. The video generation apparatus provided by the embodiments of the present disclosure may be configured in a client. The video generation apparatus specifically includes: an acquisition module 710, a matching module 720 and a first generation module 730.

Wherein, the acquisition module 710 is configured to acquire a first image material and determining a first image editing template used for the first image material; wherein, the first image editing template is used for configuring an image editing operation to be performed on a second image material so that the first image material is generated from the second image material after the second image material has been edited according to the image editing operation; wherein the first image material presents an image editing effect corresponding to the first image editing template; the matching module 720 is configured to match a first video clipping template for the first image material according to the first image editing template; and the first generation module 730 is configured to edit the first image material according to an video editing operation configured by the first video clipping template, to generate a target video.

Alternatively, it may further include: a generation and display module, configured to, before editing the first image material according to an video editing operation configured by the first video clipping template to generate a target video, in response to an operation of entering a target page, generate a video cover for the target video and display the target page; wherein the video cover and a playback control associated with the video cover are displayed in a first region in the target page, and historical image materials are displayed in a second region in the target page, the historical image materials may include the first image material, and the video cover may include the first image material.

Alternatively, the first generation module 730 is specifically configured to: in response to a trigger operation acting on the playback control, edit the first image material according to a video editing operation configured by the first video clipping template, to generate a target video.

Alternatively, it may further include: a video details page display module, configured to, in response to a trigger operation acting on the playback control, display a video details page, where the video details page includes a video playback region in which the target video is played.

Alternatively, there are multiple target videos, and the video covers of respective target videos can be arranged in the first region sequentially in the order of their respective generation times from later to earlier, and the last generated video cover is arranged on the far left of the first region; the video cover for each target video is respectively associated with a playback control; and the target video played in the video playback region is one of the multiple target videos.

Alternatively, the video cover for each target video and the playback control associated with each video cover are displayed in the video details page.

Alternatively, it may further include: a first switching module, configured to switch the target video played in the video playback region to the target video corresponding to another video cover, in response to a first trigger operation acting on a playing screen of the target video played in the video playback region, or in response to a second trigger operation acting on a target playback control in the video details page, switch the target video played in the video playback region to a target video corresponding to the video cover associated with the target playback control; wherein, the second trigger operation serves to select the target playback control from the playback controls respectively associated with respective video covers displayed in the video details page.

Alternatively, it may further include: a second generation module, configured to, after the video details page is displayed, based on generation times of the video covers of respective target videos, generate target videos respectively corresponding to the remaining video covers sequentially in the order from later to earlier.

Alternatively, a material replacement control is displayed in the video details page.

Alternatively, it may further include: a material display module, configured to, in response to a trigger operation acting on the material replacement control, display the historical image material; a determination module, configured to, in response to a third trigger operation acting on a third image material, determine a second image editing template used for the third image material; and the matching module 720 may be further configured to match a second video clipping template for the third image material according to the second image editing template; the first generation module 730 may be further configured to, according to the video editing operation configured by the second video clipping template, edit the third image material to generate a new target video; a second switching module configured to switch to the video details page, and play the new target video in the video playback region; wherein, the third trigger operation is used to select the third image material from the displayed historical image materials.

Alternatively, a saving control and a sharing control are displayed in the video details page.

Alternatively, it may further include: a saving module, configured to save the target video to the target page in response to a trigger operation acting on the saving control; a sharing module configured to, in response to a trigger operation acting on the sharing control, save the target video in a local photo album, and concurrently sending the target video to a first server, so that the first server can stream the target video to a preset client for playback.

Alternatively, the acquisition module 710 may include:
a first determination unit configured to determine image editing templates used for respective historical image materials; a second determination unit configured to determine the historical image materials using the target image editing template as candidate image materials, wherein the target image editing template is an image editing template bound to a video clipping template; a third determination unit configured to determine the first image material from the candidate image materials.

Alternatively, the third determination unit may be specifically configured to: if the candidate image materials exist under a collection label, determine a candidate image material under the collection label whose shooting time is the last as the first image material; if there is no candidate image material existing under the collection label, determine a candidate image material under a default label whose shooting time is the last as the first image material.

Alternatively, the matching module 720 may be specifically configured to: determine a preset video clipping template bound to the first image editing template as the first video clipping template; wherein, if there are a plurality of preset video clipping templates, the first video clipping template is any one of the plurality of preset video clipping templates. Alternatively, determine style characteristic of the first image material according to the first image editing template; based on the style characteristic and style characteristics of candidate video clipping templates, match the first video clipping template for the first image material.

Alternatively, the first image material may include multiple pictures, and the first generation module 730 may be specifically configured to: fill the plurality of pictures into different positions of the first video clipping template; wherein, the image editing templates respectively used for the plurality of pictures are the same, and the image editing templates respectively used for the plurality of pictures each is the first image editing template; alternatively, the image editing templates respectively used for the plurality of pictures are different, and the image editing templates respectively used for the plurality of pictures comprise the first image editing template.

Alternatively, the first generation module 730 may include:
a display unit, configured to, if the first video clipping template is a preset video clipping template, display prompt information; a sending unit configured to, in response to confirmation operation triggered for the prompt information, upload the first image material to the second server, so as to edit, by the second server, the first image material according to a video editing operation configured by the first video clipping template, to generate a target video; and a receiving unit configured to receive the target video from the second server.

The video generation apparatus provided by embodiments of the present disclosure can execute the steps in the video generation method provided by the method embodiments of the present disclosure performed by a client, and has execution steps and beneficial effects, which will not be repeated here.

It should be noted that the above-mentioned modules are only logical modules divided according to the specific functions they realize, instead of being used to limit specific implementation, for example, they can be implemented in software, hardware, or a combination of software and hardware. In actual implementation, each of the above modules may be implemented as an independent physical entity, or may also be implemented by a single entity (for example, a processor (CPU or DSP, etc.), an integrated circuit, etc.). In addition, the above-mentioned modules are shown with dotted lines in the drawings to indicate that these modules may not actually exist, and the operations/functions they realized may be implemented by the apparatus or the processing circuit itself.

In addition, although not shown, the apparatus may also include a memory that can store various information generated by the apparatus, various modules included in the apparatus during operation, programs and data for operations, data to be transmitted by the communication unit, etc. The memory can be volatile memory and/or nonvolatile memory. For example, memory may include, but is not limited to, random access memory (RAM), dynamic random-access memory (DRAM), static random-access memory (SRAM), read only memory (ROM), flash memory. Of course, the memory could also be located outside the apparatus.

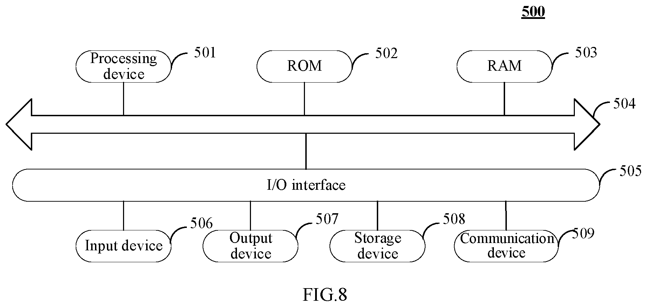

FIG. 8 is a schematic structural diagram of an electronic device. Hereinafter specifically referring to FIG. 8, which illustrates the schematic structural diagram applicable to implement electronic device 500 in the embodiments of the present disclosure. The electronic devices 500 in the embodiments of the present disclosure may include, but not limited to, mobile terminals such as mobile phones, notebook computers, digital broadcast receivers, PDAs (personal digital assistants), PAD (tablet computers), PMP (portable multimedia players), vehicle-mounted terminals (for example, vehicle-mounted navigation terminals), etc., and fixed terminals such as digital TVs, desktop computers, and the like. The electronic device shown in Fig. 8 is only an example, and should not impose any restriction on the functions and application scopes of the embodiments of the present disclosure.

As shown in Fig. 8, the electronic device 500 can include a processing apparatus (such as a central processing unit, a graphics processor, etc.) 501, which can perform various appropriate actions and processes according to a program stored in a Read Only Memory (ROM) 502 or a program loaded into a Random Access Memory (RAM) 503 from a storage device 508. In the RAM 503, various programs and data required for the operation of the electronic device 500 are also stored. The processing device 501, ROM 502 and RAM 503 are connected to each other through a bus 504. An input/output (I/O) interface 505 is also connected to the bus 504.

Generally, the following devices can be connected to the I/O interface 505: an input device 506 including, for example, touch screen, touch pad, keyboard, mouse, camera, microphone, accelerometer, gyroscope, etc.; an output device 507 such as Liquid Crystal Display (LCD), speakers, vibrators, etc.; a storage device 508 including a magnetic tape, a hard disk, etc.; and a communication device 509. The communication device 509 may allow the electronic device 500 to communicate with other devices wirelessly or in wired so as to exchange data. Although Fig. 8 shows an electronic device 500 with various devices, it should be understood that it is not required to implement or have all the devices shown. More or fewer devices may alternatively be implemented or provided.

Particularly, according to embodiments of the present disclosure, the process described above with reference to the flowchart can be implemented as a computer software program. For example, an embodiment of the present disclosure includes a computer program product including a computer program carried on a computer readable medium, the computer program containing program code for executing the method shown in the flowchart. In such an embodiment, the computer program can be downloaded and installed from the network through the communication device 509, or installed from the storage device 508 or from the ROM 502. When executed by the processing device 501, the computer program carries out the above-mentioned functions defined in the method of the embodiment of the present disclosure.

It should be noted that the above-mentioned computer-readable medium in this disclosure can be a computer-readable signal medium or a computer-readable storage medium or any combination of the two. The computer-readable storage medium can be, for example, but not limited to, an electrical, magnetic, optical, electromagnetic, infrared, or semiconductor system, device or equipment, or any combination of the above. More specific examples of computer-readable storage media may include, but not limited to, an electrical connection with one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium can be any tangible medium that contains or stores a program that can be used by or in combination with an instruction execution system, device, or equipment. In this disclosure, the computer-readable signal medium may include a data signal propagated in baseband or as a part of a carrier wave, in which computer-readable program code is carried. This propagated data signal can take many forms, including, but not limited to, electromagnetic signals, optical signals, or any suitable combination of the above. The computer-readable signal medium can also be any computer-readable medium other than the computer-readable storage medium, which can send, propagate, or transmit the program for use by or in connection with the instruction execution system, apparatus, or device. The program code contained in the computer-readable medium can be transmitted by any suitable medium, including but not limited to: electric wire, optical cable, RF (radio frequency), etc., or any suitable combination of the above.

In some embodiments, the client and the server can communicate by using any currently known or future developed network protocol such as HTTP (HyperText Transfer Protocol), and can be interconnected with any form or medium of digital data communication (e.g., communication network). Examples of communication networks include a local area network ("LAN"), a wide area network ("WAN"), an internet network (e.g., the Internet) and end-to-end network (e.g., ad hoc end-to-end network), as well as any currently known or future developed networks.

The above-mentioned computer-readable medium may be included in the electronic device; or it can exist alone without being loaded into the electronic device.

The above-mentioned computer-readable medium carries one or more programs, which, when executed by the electronic device, cause the electronic device to execute the following: acquiring a first image material and determining a first image editing template used for the first image material; wherein, the first image editing template is used for configuring an image editing operation to be performed on a second image material so that the first image material is generated from the second image material after the second image material has been edited according to the image editing operation; wherein the first image material presents an image editing effect corresponding to the first image editing template; matching a first video clipping template for the first image material according to the first image editing template; editing the first image material according to a video editing operation configured by the first video clipping template, to generate a target video.

Alternatively, when the above one or more programs are executed by the electronic device, the electronic device can further execute other steps as described in the above embodiments.

Computer program codes for performing the operations of the present disclosure can be written in one or more programming languages or a combination thereof, including object-oriented programming languages such as Java, Smalltalk, and C++, as well as conventional procedural programming languages such as "C" language or similar programming languages. The program codes can be completely executed on the user's computer, partially executed on the user's computer, executed as an independent software package, partially executed on the user's computer, and partially executed on the remote computer, or completely executed on the remote computer or server. In a case related to remote computers, the remote computers can be connected to the user computers through any kind of networks, including Local Area Network (LAN) or Wide Area Network (WAN), or can be connected to external computers (for example, through the Internet with Internet service providers).

The flowcharts and block diagrams in the drawings illustrate the architecture, functions, and operations of possible embodiments of systems, methods, and computer program products according to various embodiments of the present disclosure. In this regard, each block in the flowchart or block diagram may represent a module, a program segment, or a part of the code, which contains one or more executable instructions for implementing specified logical functions. It should also be noted that in some alternative implementations, the functions labeled in the blocks may also occur in a different order than those labeled in the drawings. For example, two blocks shown in succession can actually be executed substantially in parallel, and sometimes they can be executed in the reverse order, depending on the functions involved. It should also be noted that each block in the block diagram and/or flowchart, and the combination of blocks in the block diagram and/or flowchart, can be realized by a dedicated hardware-based system that performs specified functions or operations, or can be realized by a combination of dedicated hardware and computer instructions.

The units described in the embodiments of this disclosure can be realized by software or hardware. In some cases, the name of the unit does not limit the module itself.

The functions described above herein can be at least partially performed by one or more hardware logic components. For example, without limitation, exemplary types of hardware logic components that can be used may include: field programmable gate array (FPGA), application specific integrated circuit (ASIC), application specific standard product (ASSP), system on chip (SOC), complex programmable logic device (CPLD) and so on.

In the context of the present disclosure, a machine-readable medium can be a tangible medium that can contain or store a program for use by or in connection with an instruction execution system, apparatus, or device. The machine-readable medium can be a machine-readable signal medium or a machine-readable storage medium. The machine-readable medium may include, but not limited to, electronic, magnetic, optical, electromagnetic, infrared, or semiconductor systems, devices or equipment, or any suitable combination of the foregoing. More specific examples of machine-readable storage medium may include electrical connections based on one or more wires, portable computer disks, hard disks, random access memories (RAM), read-only memories (ROM), erasable programmable read-only memories (EPROM or flash memories), optical fibers, compact disk read-only memories (CD-ROMs), optical storage devices, magnetic storage devices, or any suitable combination of the above.

According to one or more embodiments of the present disclosure, the present disclosure provides a video generation method, the method may include: acquiring a first image material and determining a first image editing template used for the first image material; wherein, the first image editing template is used for configuring an image editing operation to be performed on a second image material so that the first image material is generated from the second image material after the second image material has been edited according to the image editing operation; wherein the first image material presents an image editing effect corresponding to the first image editing template; matching a first video clipping template for the first image material according to the first image editing template; editing the first image material according to a video editing operation configured by the first video clipping template, to generate a target video.

According to one or more embodiments of the present disclosure, in the video generation method provided by the present disclosure, alternatively, before editing the first image material according to an video editing operation configured by the first video clipping template to generate a target video, the method may further include: in response to an operation of entering a target page, generating a video cover for the target video and displaying the target page; wherein the video cover and a playback control associated with the video cover are displayed in a first region in the target page, and historical image materials are displayed in a second region in the target page, the historical image materials may include the first image material, and the video cover may include the first image material.

According to one or more embodiments of the present disclosure, in the video generation method provided by the present disclosure, alternatively, the editing the first image material according to a video editing operation configured by the first video clipping template, to generate a target video may include: in response to a trigger operation acting on the playback control, editing the first image material according to a video editing operation configured by the video clipping template, to generate a target video; the method may further include: in response to a trigger operation acting on the playback control, displaying a video details page, where the video details page includes a video playback region in which the target video is played.

According to one or more embodiments of the present disclosure, in the video generation method provided by the present disclosure, alternatively, there are multiple target videos, and the video covers of respective target videos can be arranged in the first region sequentially in the order of their respective generation times from later to earlier, and the last generated video cover is arranged on the far left of the first region; the video cover for each target video is respectively associated with a playback control; and the target video played in the video playback region is one of the multiple target videos.

According to one or more embodiments of the present disclosure, in the video generation method provided by the present disclosure, alternatively, the video cover for each target video and the playback control associated with each video cover are displayed in the video details page; the method may further include: in response to a first trigger operation acting on a playing screen of the target video played in the video playback region, switching the target video played in the video playback region to the target video corresponding to another video cover, or in response to a second trigger operation acting on a target playback control in the video details page, switching the target video played in the video playback region to a target video corresponding to the video cover associated with the target playback control; wherein, the second trigger operation serves to select the target playback control from the playback controls respectively associated with respective video covers displayed in the video details page.

According to one or more embodiments of the present disclosure, in the video generation method provided by the present disclosure, alternatively, the method may further include: after the video details page is displayed, based on generation times of the video covers of respective target videos, generating target videos respectively corresponding to the remaining video covers sequentially in the order from later to earlier.

According to one or more embodiments of the present disclosure, in the video generation method provided by the present disclosure, alternatively, a material replacement control is displayed in the video details page; the method may further include: in response to a trigger operation acting on the material replacement control, displaying the historical image material; in response to a third trigger operation acting on a third image material, determining a second image editing template used for the third image material, wherein the third trigger operation serves to select the third image material from the displayed historical image materials; and matching a second video clipping template for the third image material according to the second image editing template; according to the video editing operation configured by the second video clipping template, editing the third image material to generate a new target video; switching to the video details page, and playing the new target video in the video playback region.

According to one or more embodiments of the present disclosure, in the video generation method provided by the present disclosure, alternatively, a saving control and a sharing control are displayed in the video details page; the method may further include: saving the target video to the target page in response to a trigger operation acting on the saving control; in response to a trigger operation acting on the sharing control, saving the target video in a local photo album, and concurrently sending the target video to a first server, so that the first server can stream the target video to a preset client for playback.

According to one or more embodiments of the present disclosure, in the video generation method provided by the present disclosure, alternatively, the acquiring the first image material may include: determining image editing templates used for respective historical image materials; determining the historical image materials using the target image editing template as candidate image materials, wherein the target image editing template is an image editing template bound to a video clipping template; determining the first image material from the candidate image materials.

According to one or more embodiments of the present disclosure, in the video generation method provided by the present disclosure, alternatively, the determining the first image material from the candidate image materials may include: if the candidate image materials exist under a collection label, determining a candidate image material under the collection label whose shooting time is the last as the first image material; if there is no candidate image material existing under the collection label, determining a candidate image material under a default label whose shooting time is the last as the first image material.

According to one or more embodiments of the present disclosure, in the video generation method provided by the present disclosure, alternatively, the matching a first video clipping template for the first image material according to the first image editing template may include: determining a preset video clipping template bound to the first image editing template as the first video clipping template; wherein, if there are a plurality of preset video clipping templates, the first video clipping template is any one of the plurality of preset video clipping templates.

According to one or more embodiments of the present disclosure, in the video generation method provided by the present disclosure, alternatively, the editing the first image material according to a video editing operation configured by the first video clipping template, to generate a target video, may include: filling the plurality of pictures into different positions of the first video clipping template; wherein, the image editing templates respectively used for the plurality of pictures are the same, and the image editing templates respectively used for the plurality of pictures each is the first image editing template; alternatively, the image editing templates respectively used for the plurality of pictures are different, and the image editing templates respectively used for the plurality of pictures comprise the first image editing template.

According to one or more embodiments of the present disclosure, in the video generation method provided by the present disclosure, alternatively, the matching a first video clipping template for the first image material according to the first image editing template may include: determining style characteristic of the first image material according to the first image editing template; based on the style characteristic and style characteristics of candidate video clipping templates, matching the first video clipping template for the first image material.

According to one or more embodiments of the present disclosure, in the video generation method provided by the present disclosure, alternatively, the editing the first image material according to a video editing operation configured by the first video clipping template, to generate a target video, may include: if the first video clipping template is a preset video clipping template, displaying prompt information; in response to confirmation operation triggered for the prompt information, uploading the first image material to the second server, so as to edit, by the second server, the first image material according to a video editing operation configured by the first video clipping template, to generate a target video; and receiving the target video from the second server.

According to one or more embodiments of the present disclosure, the present disclosure may provide a video generation apparatus, including: an acquisition module, configured to acquire a first image material and determining a first image editing template used for the first image material; wherein, the first image editing template is used for configuring an image editing operation to be performed on a second image material so that the first image material is generated from the second image material after the second image material has been edited according to the image editing operation; wherein the first image material presents an image editing effect corresponding to the first image editing template; a matching module, configured to match a first video clipping template for the first image material according to the first image editing template; a first generation module, configured to edit the first image material according to an video editing operation configured by the first video clipping template, to generate a target video.

According to one or more embodiments of the present disclosure, in the video generation apparatus, alternatively, it may further include: a generation and display module, configured to, before editing the first image material according to an video editing operation configured by the first video clipping template to generate a target video, in response to an operation of entering a target page, generate a video cover for the target video and display the target page; wherein the video cover and a playback control associated with the video cover are displayed in a first region in the target page, and historical image materials are displayed in a second region in the target page, the historical image materials may include the first image material, and the video cover may include the first image material.

According to one or more embodiments of the present disclosure, in the video generation apparatus, alternatively, the first generation module may be specifically configured to: in response to a trigger operation acting on the playback control, edit the first image material according to a video editing operation configured by the first video clipping template, to generate a target video.

According to one or more embodiments of the present disclosure, in the video generation apparatus, alternatively, it may further include: a video details page display module, configured to, in response to a trigger operation acting on the playback control, display a video details page, where the video details page includes a video playback region in which the target video is played.

According to one or more embodiments of the present disclosure, in the video generation apparatus, alternatively, there are multiple target videos, and the video covers of respective target videos can be arranged in the first region sequentially in the order of their respective generation times from later to earlier, and the last generated video cover is arranged on the far left of the first region; the video cover for each target video is respectively associated with a playback control; and the target video played in the video playback region is one of the multiple target videos.

According to one or more embodiments of the present disclosure, in the video generation apparatus, alternatively, the video cover for each target video and the playback control associated with each video cover are displayed in the video details page.

According to one or more embodiments of the present disclosure, in the video generation apparatus, alternatively, it may further include: a first switching module, configured to switch the target video played in the video playback region to the target video corresponding to another video cover, in response to a first trigger operation acting on a playing screen of the target video played in the video playback region, or in response to a second trigger operation acting on a target playback control in the video details page, switch the target video played in the video playback region to a target video corresponding to the video cover associated with the target playback control; wherein, the second trigger operation serves to select the target playback control from the playback controls respectively associated with respective video covers displayed in the video details page.

According to one or more embodiments of the present disclosure, in the video generation apparatus, alternatively, it may further include: a second generation module, configured to, after the video details page is displayed, based on generation times of the video covers of respective target videos, generate target videos respectively corresponding to the remaining video covers sequentially in the order from later to earlier.

According to one or more embodiments of the present disclosure, in the video generation apparatus, alternatively, a material replacement control is displayed in the video details page.

According to one or more embodiments of the present disclosure, in the video generation apparatus, alternatively, it may further include: a material display module, configured to, in response to a trigger operation acting on the material replacement control, display the historical image material; a determination module, configured to, in response to a third trigger operation acting on a third image material, determine a second image editing template used for the third image material; and the matching module 720 may be further configured to match a second video clipping template for the third image material according to the second image editing template; the first generation module 730 may be further configured to, according to the video editing operation configured by the second video clipping template, edit the third image material to generate a new target video; a second switching module configured to switch to the video details page, and play the new target video in the video playback region; wherein, the third trigger operation is used to select the third image material from the displayed historical image materials.

According to one or more embodiments of the present disclosure, in the video generation apparatus, alternatively, a saving control and a sharing control are displayed in the video details page.

According to one or more embodiments of the present disclosure, in the video generation apparatus, alternatively, it may further include: a saving module, configured to save the target video to the target page in response to a trigger operation acting on the saving control; a sharing module configured to, in response to a trigger operation acting on the sharing control, save the target video in a local photo album, and concurrently send the target video to a first server, so that the first server can stream the target video to a preset client for playback.

According to one or more embodiments of the present disclosure, in the video generation apparatus, alternatively, the acquisition module may include: a first determination unit configured to determine image editing templates used for respective historical image materials; a second determination unit configured to determine the historical image materials using the target image editing template as candidate image materials, wherein the target image editing template is an image editing template bound to a video clipping template; a third determination unit configured to determine the first image material from the candidate image materials.

According to one or more embodiments of the present disclosure, in the video generation apparatus, alternatively, the third determination unit may be specifically configured to: if the candidate image materials exist under a collection label, determine a candidate image material under the collection label whose shooting time is the last as the first image material; if there is no candidate image material existing under the collection label, determine a candidate image material under a default label whose shooting time is the last as the first image material.

According to one or more embodiments of the present disclosure, in the video generation apparatus, alternatively, the matching module may be specifically configured to: determine a preset video clipping template bound to the first image editing template as the first video clipping template; wherein, if there are a plurality of preset video clipping templates, the first video clipping template is any one of the plurality of preset video clipping templates. Alternatively, determine style characteristic of the first image material according to the first image editing template; based on the style characteristic and style characteristics of candidate video clipping templates, match the first video clipping template for the first image material.

According to one or more embodiments of the present disclosure, in the video generation apparatus, alternatively, the first image material may include multiple pictures, and the first generation module may be specifically configured to: fill the plurality of pictures into different positions of the first video clipping template; wherein, the image editing templates respectively used for the plurality of pictures are the same, and the image editing templates respectively used for the plurality of pictures each is the first image editing template; alternatively, the image editing templates respectively used for the plurality of pictures are different, and the image editing templates respectively used for the plurality of pictures comprise the first image editing template.

According to one or more embodiments of the present disclosure, in the video generation apparatus, alternatively, the first generation module may include: a display unit, configured to, if the first video clipping template is a preset video clipping template, display prompt information; a sending unit configured to, in response to confirmation operation triggered for the prompt information, upload the first image material to the second server, so as to edit, by the second server, the first image material according to a video editing operation configured by the first video clipping template, to generate a target video; and a receiving unit configured to receive the target video from the second server.

According to one or more embodiments of the present disclosure, the present disclosure provides an electronic device, including:
one or more processors;
a memory for storing one or more programs;
wherein the one or more programs, when executed by the one or more processors, cause the one or more processors to implement any one of the methods provided in the present disclosure.

According to one or more embodiments of the present disclosure, the present disclosure provides a computer-readable storage medium, on which a computer program is stored, and when the program is executed by a processor, any one of the methods provided in the present disclosure is implemented.

An embodiment of the present disclosure also provides a computer program product, where the computer program product includes a computer program or an instruction, and when the computer program or instruction is executed by a processor, the method as described above is implemented.

An embodiment of the present disclosure also provides a computer program, the program code included in the computer program enables the computer to implement the above method when executed by the computer.

The above description is only a preferred embodiment of the present disclosure and an illustration of the applied technical principles. Those skilled in the art should understand that the scope of the disclosure involved in this disclosure is not limited to the technical solutions formed by the specific combination of the above technical features, but also covers the technical solutions formed by the above technical features or Other technical solutions formed by any combination of equivalent features. For example, a technical solution formed by replacing the above-mentioned features with (but not limited to) technical features with similar functions disclosed in this disclosure.

In addition, while operations are depicted in a particular order, this should not be understood as requiring that the operations be performed in the particular order shown or to be performed in sequential order. Under certain circumstances, multitasking and parallel processing may be advantageous. Likewise, while the above discussion contains several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A video generation method, comprising:
acquiring a first image material and determining a first image editing template used for the first image material; wherein, the first image editing template is used for configuring an image editing operation to be performed on a second image material so that the first image material is generated from the second image material after the second image material has been edited according to the image editing operation; wherein the first image material presents an image editing effect corresponding to the first image editing template;
matching a first video clipping template for the first image material according to the first image editing template;
editing the first image material according to a video editing operation configured by the first video clipping template, to generate a target video.

2. The method of claim 1, wherein, before editing the first image material according to a video editing operation configured by the first video clipping template to generate a target video, the method further comprises:
in response to an operation of entering a target page, generating a video cover for the target video and displaying the target page; wherein the video cover and a playback control associated with the video cover are displayed in a first region in the target page, and historical image materials are displayed in a second region in the target page, the historical image materials comprises the first image material, and the video cover comprises the first image material.

3. The method of claim 2, wherein, the editing the first image material according to a video editing operation configured by the first video clipping template, to generate a target video, comprises:
In response to a trigger operation acting on the playback control, editing the first image material according to a video editing operation configured by the video clipping template, to generate a target video;
the method further comprises:
in response to a trigger operation acting on the playback control, displaying a video details page, where the video details page comprises a video playback region in which the target video is played.

4. The method of claim 3, wherein, there are multiple target videos, and the video covers of respective target videos can be arranged in the first region sequentially in the order of their respective generation times from later to earlier, and the last generated video cover is arranged on the far left of the first region;
the video cover for each target video is respectively associated with a playback control;
the target video played in the video playback region is one of the multiple target videos.

5. The method of claim 4, wherein, the video cover for each target video and the playback control associated with each video cover are displayed in the video details page;
the method further comprises:
in response to a first trigger operation acting on a playing screen of the target video played in the video playback region, switching the target video played in the video playback region to the target video corresponding to another video cover,
or in response to a second trigger operation acting on a target playback control in the video details page, switching the target video played in the video playback region to a target video corresponding to the video cover associated with the target playback control; wherein, the second trigger operation serves to select the target playback control from the playback controls respectively associated with respective video covers displayed in the video details page.

6. The method of claim 4, wherein, after the video details page is displayed, the method further comprises:
based on generation times of the video covers of respective target videos, generating target videos respectively corresponding to the remaining video covers sequentially in the order from later to earlier.

7. The method of claim 3, wherein, a material replacement control is displayed in the video details page;
the method further comprises:
in response to a trigger operation acting on the material replacement control, displaying the historical image material;
in response to a third trigger operation acting on a third image material, determining a second image editing template used for the third image material, wherein the third trigger operation serves to select the third image material from the displayed historical image materials;
matching a second video clipping template for the third image material according to the second image editing template;
according to the video editing operation configured by the second video clipping template, editing the third image material to generate a new target video;
switching to the video details page, and playing the new target video in the video playback region.

8. The method of claim 3, wherein, a saving control and a sharing control are displayed in the video details page; the method further comprises:
saving the target video to the target page in response to a trigger operation acting on the saving control;
in response to a trigger operation acting on the sharing control, saving the target video in a local photo album, and concurrently sending the target video to a first server, so that the first server can stream the target video to a preset client for playback.

9. The method of claim 1, wherein, the acquiring the first image material comprises:
determining image editing templates used for respective historical image materials;
determining the historical image materials using the target image editing template as candidate image materials, wherein the target image editing template is an image editing template bound to a video clipping template;
determining the first image material from the candidate image materials.

10. The method of claim 9, wherein, the determining the first image material from the candidate image materials comprises:
if the candidate image materials exist under a collection label, determining a candidate image material under the collection label whose shooting time is the last as the first image material;
if there is no candidate image material existing under the collection label, determining a candidate image material under a default label whose shooting time is the last as the first image material.

11. The method of claim 1, wherein, the matching a first video clipping template for the first image material according to the first image editing template comprises:
determining a preset video clipping template bound to the first image editing template as the first video clipping template;
wherein, if there are a plurality of preset video clipping templates, the first video clipping template is any one of the plurality of preset video clipping templates.

12. The method of claim 1, wherein, the first image material comprises a plurality of pictures, and the editing the first image material according to a video editing operation configured by the first video clipping template, to generate a target video, comprises:
filling the plurality of pictures into different positions of the first video clipping template; wherein, the image editing templates respectively used for the plurality of pictures are the same, and the image editing templates respectively used for the plurality of pictures each is the first image editing template; or, the image editing templates respectively used for the plurality of pictures are different, and the image editing templates respectively used for the plurality of pictures comprise the first image editing template.

13. The method of claim 1, wherein, the matching a first video clipping template for the first image material according to the first image editing template comprises:
determining style characteristic of the first image material according to the first image editing template;
based on the style characteristic and style characteristics of candidate video clipping templates, matching the first video clipping template for the first image material.

14. The method of claim 1, wherein, the editing the first image material according to a video editing operation configured by the first video clipping template, to generate a target video, comprises:
if the first video clipping template is a preset video clipping template, displaying prompt information;
in response to confirmation operation triggered for the prompt information, uploading the first image material to the second server, so as to edit, by the second server, the first image material according to a video editing operation configured by the first video clipping template, to generate a target video; and
receiving the target video from the second server.

15. A video generation apparatus, comprising:
an acquisition module, configured to acquire a first image material and determining a first image editing template used for the first image material; wherein, the first image editing template is used for configuring an image editing operation to be performed on a second image material so that the first image material is generated from the second image material after the second image material has been edited according to the image editing operation; wherein the first image material presents an image editing effect corresponding to the first image editing template;
a matching module, configured to match a first video clipping template for the first image material according to the first image editing template; and
a first generation module, configured to edit the first image material according to a video editing operation configured by the first video clipping template, to generate a target video.

16. An electronic device, comprising:
one or more processors; and
a memory for storing one or more instructions;
wherein the one or more instructions, when executed by the one or more processors, cause the one or more processors to implement the method of any one of claims 1-14.

17. A computer-readable storage medium storing computer program which, when executed by a processor, cause implementation of the method of any one of claims 1-14.

18. A computer program product comprising computer programs, which, when executed by a processor, cause implementation of the method of any one of claims 1-14.

19. A computer program comprising program codes which, when executed by a computer, cause implementation of the method of any one of claims 1-14.
